# EUROPÄISCHE PATENTSCHRIFT

(11) **EP 0 803 833 B1**
(45) Veröffentlichungstag und Bekanntmachung des Hinweises auf die Patenterteilung: **26.11.2003**
(21) Anmeldenummer: 97105660.1
(22) Anmeldetag: 05.04.1997
(51) Int. Cl.: G06K 7/06, G06K 7/00

(54) **Kombichipkartenleser**
Combined chip card reader
Lecteur de carte à puce mixte

(30) Priorität: 22.04.1996 DE 29607253 U
(43) Veröffentlichungstag der Anmeldung: 29.10.1997
(73) Patentinhaber: STOCKO Contact GmbH & Co. KG, 42327 Wuppertal (DE)
(72) Erfinder: Klatt, Dieter, 42489 Wülfrath (DE); Pelke, Bernhard, 42119 Wuppertal (DE)
(74) Vertreter: Stenger, Watzke & Ring Patentanwälte

(56) Entgegenhaltungen:
- EP-A- 0 287 417
- EP-A- 0 533 542
- EP-A- 0 656 598
- EP-A- 0 675 456
- EP-A- 0 704 813
- DE-U- 29 505 678
- DE-U- 29 518 707
- DE-U- 29 602 632
- US-A- 3 777 120

## Beschreibung

Die Erfindung betrifft eine Kontaktiereinheit für ein kartenförmiges Trägerelement elektronischer Baugruppen, insbesondere eine PCMCIA- Karte, **mit den Merkmalen des Oberbegriffs des Anspruchs 1. Eine derartige Kontaktiereinheit ist beispielsweise aus der EP 0 704 813 A2 bekannt.**

Im Bereich der Computertechnologie werden elektronische Baugruppen vorzugsweise auf kartenförmigen Trägerelementen angeordnet Diese weisen Kontaktbereiche auf und sind in Kontaktiereinheiten einschiebbar, wo sie elektrisch kontaktiert und in den Datenkreislauf integriert werden. Hierzu gehören die sogenannten Chip-Karten, die derzeit beispielsweise als Telefonkarten Verwendung finden. Sie weisen flächig angeordnete Kontaktfelder für die Kontaktierung eines Chips auf und werden in als Leseeinheiten ausgebildete Kontaktiereinheiten eingeschoben.

Ferner sind **beispielsweise aus der DE 295 05 678 U1 oder der DE 296 02 632 U1** kartenförmige Trägerelemente nach PCMCIA-Norm bekannt, die ein genormtes matrixartiges, an ihrer vorderen Einsteckkante ausgebildetes, steckbares Anschlußkontaktfeld aufweisen und unterschiedlichste IC-Schaltkreise aufnehmen können. Derartige Karten können Speichererweiterungskarten, Laufwerkskarten, Modemkarten u. dgl. sein. Sie lassen sich in Kontaktiereinheiten mit einer entsprechenden Stiftmatrix kontaktieren, wozu sie in den Einschubschlitz, beispielsweise eines Computers eingeschoben werden.

Aus der EP 0552 078 A1 ist ferner die Kombination dieser bekannten Kartensysteme bekannt, wodurch gleichzeitig eine PCMCIA-Karte und eine Chip-Karte in einen entsprechenden Modulaufnahmeschlitz eines Computers eingeschoben und gelesen werden können. Nachteilig sind hier das Freiliegen des Kontaktfeldes und die mangelhafte Führung der Chip-Karte, die darüber hinaus auch in ihrer Betriebsposition relativ zur PCMCIA-Karte bewegbar ist, so daß eine sichere Kontaktierung nicht gewährleistet ist.

Eine besondere Ausbildung der Chipkartenaufnahme und Möglichkeit zum einfachen Anschluß an den Computer wird hierzu in der DE 43 10 517 A1 vorgeschlagen, indem an der Kontaktiereinheit der PCMCIA-Karte ein Einschubkanal für die Chip-Karte und eine Einschubführung ausgebildet sind, die einen gegenüber der PCMCIA-Karte vorstehenden Bereich aufweist, der ein sicheres Einstecken der gesamten Kontaktiereinheit in den Modulaufnahmeschlitz des Computers ermöglicht. Nachteiligerweise weicht dieser Vorschlag jedoch stark von der normierten Ausgestaltung der PCMCIA-Karte ab und kann ebenfalls nicht sicherstellen, daß die Chip-Karte in ihrer Kontaktierungsposition unverschiebbar ist. Ein sicherer Betrieb im Sinne einer Vielfachbetätigung an Automaten und dgl. kann mit den vorbekannten Kontaktiereinheiten nicht gewährleistet werden. Darüber hinaus ist durch die an den Längsseiten völlig offene Konstruktion des Gehäuses die mechanische Stabilität der Kontaktiereinheit und deren Torsionssteifigkeit gering, so daß die Funktionssicherheit im Langzeitbetrieb gefährdet ist.

Ausgehend von diesem Stand der Technik liegt der Erfindung die **Aufgabe** zugrunde, eine Kontaktiereinheit der eingangs genannten Art unter Meidung der beschriebenen Nachteile dadurch zu verbessern, daß eine sichere Halterung, Kontaktierung und Führung in der Kombination einer PCMCIA-Karte mit einer oder mehreren zusätzlich einschiebbaren Chip-Karten gewährleistet ist und das Gehäuse der Kontaktiereinheit bei kleinsten Abmessungen eine hohe Torsionssteifigkeit, Festigkeit und damit Dauerhaltbarkeit aufweist.

Die Aufgabe ist **bei einer Kontaktiereinheit mit den Merkmalen des Oberbegriffs des Anspruchs 1** erfindungsgemäß **durch die Merkmale des kennzeichnenden Teils des Anspruchs 1 gelöst**.

Hierdurch wird die Stabilität der Kontaktiereinheit in ihrer Gesamtheit deutlich erhöht und, eine sichere Positionierung der eingeschobenen Chip-Karte in ihrer Kontaktierungsposition erreicht **und der Anwendungsbereich der erfindungsgemäßen Kontaktiereinheit erweitert, wozu sie aufgrund Ihrer Stabilität und Kompaktheit geeignet ist.**

Eine weitere Verbesserung kann gemäß einer zweckmäßigen Ausgestaltung der Erfindung dadurch herbeigeführt werden, daß an der Einschubführung für die Chip-Karte eine Verriegelungeinrichtung, vorzugsweise in Form zweier mit den Anschlägen korrespondierender Klemmnocken, vorgesehen wird, mit der die Chip-Karte in ihrer Endposition - bei Bedarf wieder entnehmbar - gesichert wird.

Vorzugsweise besteht die Kontaktiereinheit aus einem Gehäuse mit einem die Leiterplatte der PCMCIA-Karte haltenden Rahmen, an dessen einer Stirnseite die Einschubführung und an dessen anderer Stirnseite das Anschlußfeld angeordnet sind, die durch die mit Abstand parallel zur Leiterplatte verlaufende Basisplatte miteinander verbunden sind derart, daß ein Einschubkanal für die Chip-Karte gebildet ist, der endseitig durch die beiden Anschläge und Klemmnocken begrenzt ist, wobei die seitlichen Abdeckungen zwischen Einschubführung und Anschlußfeld den Rahmen bis zur Dicke der Leiterplatte bedecken und den Einschubkanal seitlich freilassen. Vorteilhafterweise sind die seitlichen Abdeckungen an einem den Rahmen an der Oberseite abschließenden Deckelelement, insbesondere aus Blech, durch leistenförmige Abbiegungen zur U-Querschnittsform ausgebildet, um die Gehäusefestigkeit weiter zu erhöhen.

Diesem Ziel dient auch der weitere Vorschlag der Erfindung, den Rahmen als einstückiges Kunststoffteil auszubilden und mit der Basisplatte und dem Deckelelement zu einer Einheit zu verbinden, wobei die Basisplatte und das Deckelelement als einstückiges Blechteil ausgebildet sind. Die Einschubführung kann in zweckmäßiger Ausgestaltung der Erfindung mit Einlaufschrägen ausgestattet sein und es kann der den Klemmnocken gegenüberliegende Bereich mit einer Ausnehmung zurückspringend ausgebildet sein, um die Einführung, Entarretierung und Entnahme der Chip-Karte zu vereinfachen. Das elektrische Kontaktelement ist vorzugsweise ein Leitgummistreifen. Die Mini-Chip-Kartenaufnahme kann z.B. durch einen oder mehrere Stege in Fächer zur Aufnahme mehrerer Mini-Chip-Karten unterteilt sein, so daß ein Kombichipkartenlesegerät geschaffen ist, das eine PCMCIA-Karte mit einer Chip-Karte nach DIN/ISO 7816 und einer oder mehreren Mini-Chip-Karten kombiniert. Eine derartige Kontaktiereinheit nach der Erfindung erlaubt das Einbringen der Chip- und Mini-Chip-Karten ohne verbreiterten Kartenführungsbereich auch bei einem Lesesystem der PCMCIA-Norm entsprechenden Kartentypen I, II oder III. Dabei kann ergänzend in der Basisplatte ein Fenster in der Größe des Chip-Kartenlesers eingebracht sein, um mit einem fremden Kartensystem eine Personalisierung des Moduls vornehmen zu können, z.B. für das Nachladen des Lesers für zusätzliche Daten oder Veränderungen.

Zweckmäßigerweise ist die Mini-Chip-Kartenaufnahme als Kassettenmechanismus mit einer Rast/Entrasteinrichtung versehen, vorzugsweise in einer Anordnung, die eine Entriegelung im gesteckten Betriebszustand der Kontaktiereinheit nicht ermöglicht, wobei über die schrägstehende Kassettenlage in Öffungsstellung während des Schließvorgangs eine Kontaktselbstreinigung dadurch vorgenommen wird, daß eine Kontaktflächenreibung zwischen Chip und elektrischem Kontaktelement bewirkt wird. Durch die im Nutzungszustand geschlossene Kassette werden die Kontaktelemente darüber hinaus gegen Verschmutzungen und Zugriff geschützt. Dazu kann es vorteilhaft sein, in der Mini-Chip-Kartenaufnahme Andruck- oder Haltefedern vorzusehen, mit denen die eingesetzte Karte in Kontaktfunktionslage gebracht wird. Zusätzlich können seitliche Andruckfedern vorgesehen sein, die die eingesetzte Karte seitlich klemmen und dadurch Schutz gegen Herausfallen bei geöffneter Kassette bieten.

Weitere Einzelheiten, Vorteile und Merkmale der Erfindung ergeben sich aus der nachfolgenden Beschreibung der zugehörigen Zeichnung, in der zwei bevorzugte Ausführungsformen eines erfindungsgemäßen Kombichipkartenlesers schematisch dargestellt sind. In der Zeichnung zeigt:
- Fig. 1: eine Kontaktiereinheit perspektivisch mit in Einsteckvorbereitung befindlichen Chip-Karten;
- Fig. 2: eine modifizierte Kontaktiereinheit und
- Fig. 3: eine Explosionsdarstellung der Kontaktiereinheit der Fig. 2 perspektivisch.

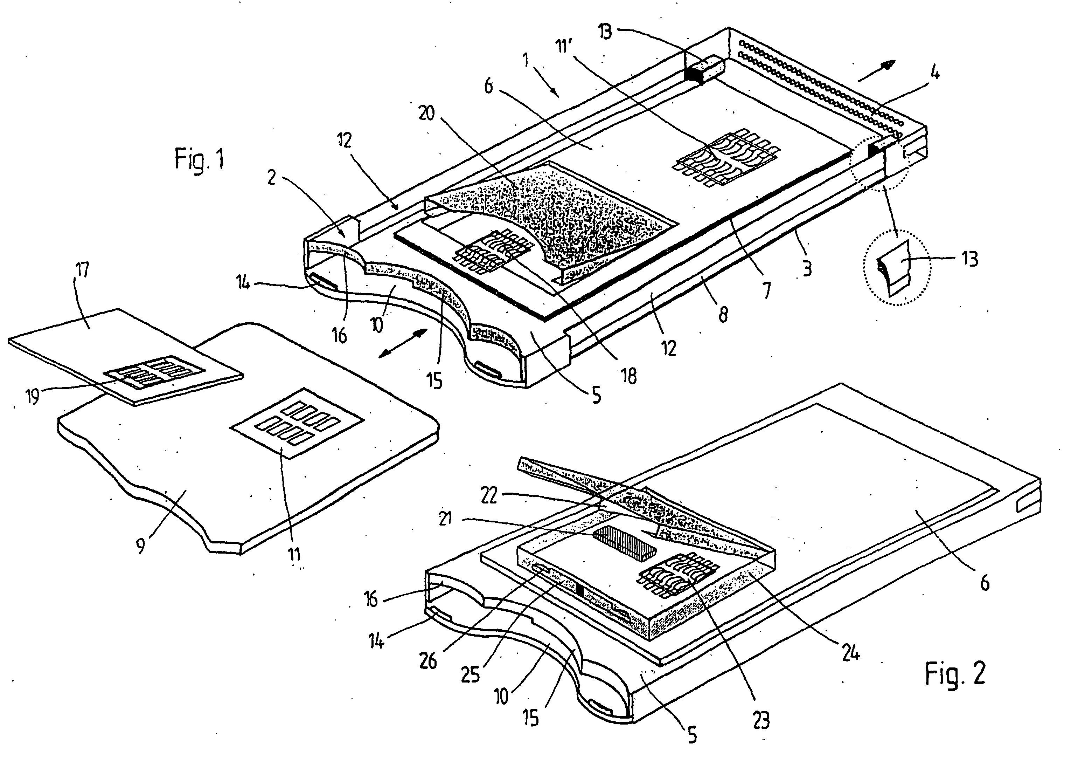

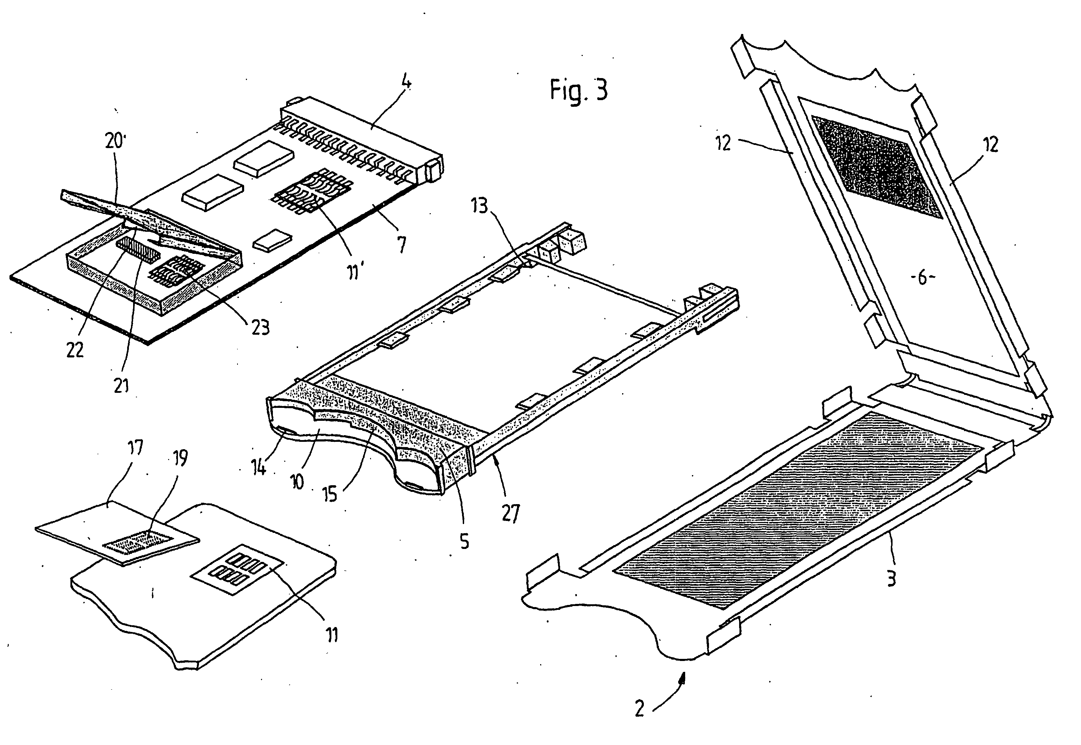

Das in Fig. 1 dargestellte Ausführungsbeispiel der Erfindung zeigt eine als Kombichipkartenleser ausgebildete Kontaktiereinheit 1, die vorgesehen ist, über eine normgemäße PCMCIA-Schnittstelle mit einem Computer kontaktiert zu werden: Die Kontaktiereinheit 1 besteht aus einem Gehäuse 2 mit einer Basisplatte 3, einem Anschlußfeld 4 an dem in Einschubrichtung gemäß Pfeil vorderen Ende, einer Einschubführung 5 am gegenüberliegenden Ende und einem parallel mit Abstand zur Basisplatte 3 sich erstreckenden Deckelelement 6, welches - wie die Basisplatte 3 - das Anschlußfeld 4 mit der Einschubführung 5 starr verbindet. Die Basisplatte 3 und das Deckelelement 6 sind als einstückiges Blechteil entsprechend Fig. 3 ausgebildet. Dabei werden die genannten Elemente von einem innenliegenden Rahmen 27 aus PCB getragen (siehe Fig. 3), der eine PCMCIA-Leiterplatte 7 mit Abstand parallel zur Basisplatte 3 derart hält, daß dazwischen ein Einschubkanal 8 für eine ISO 7816 Chip-Karte 9 gebildet wird, die über einen Einschubschlitz 10 der Einschubführung 5 in die Kontaktiereinheit 1 einschiebbar ist. Die Chip-Karte 9 läßt sich in Richtung des gezeigten Doppelpfeils in die Kontaktiereinheit 1 einschieben und aus dieser wieder herausziehen, wobei über das auf die Oberfläche angeordnete Chipfeld 11 der Chip-Karte 9 und Kontaktelemente 11' auf der Unterseite der PCMCIA-Leiterplatte 7 eine Kontaktierung vornehmbar ist, die eine Verarbeitung der Chip-Karte über die PCMCIA-Karte ermöglichen, wenn die letztgenannte in den Einschubschlitz eines elektronischen Verarbeitungsgerätes eingesetzt ist und mit dessen PCMCIA-Schnittstelle über das Anschlußfeld 4 verbunden ist:

Das Deckelelement 6 besteht - wie die Basisplatte 3 - aus Blech und ist zu einem U-förmigen Querschnitt seitlich abgebogen, um an beiden Längsseiten der Kontaktiereinheit 1 eine seitliche Blechabdeckung 12 bereitzustellen, die den PCB-Rahmen 27 bzw. die PCMCIA-Leiterplatte 7 bis zur unteren Längskante abdeckt, um eine komplette seitliche Gehäuseeinfassung der Leiterplatte 7 zu erhalten. Dabei ist das Deckelelement 6 und sind ggfs. die Blechabdeckungen 12 mit der Einschubführung 5 sowie dem Anschlußfeld 4 fest, insbesondere durch Verschweißen, verbunden, um ein insgesamt torsionssteifes durch den eingesetzten Rahmen 27 stabilisiertes Gehäuse 2 auszubilden. Der seitliche Bereich zwischen den Blechabdeckungen 12 und der Basisplatte 3 bleibt offen, so daß der Chip-Kartenführungsbereich ohne Abdeckung ist und die Gesamtbreite der Kontaktiereinheit im Computersteckbereich nur der genormten Breite der ISO-Chip-Karte 9 entspricht. Um trotz des seitlich offenen Chip-Kartenführungsbereichs eine sichere Positionierung, Halterung und Kontaktierung der in den Einschubkanal 8 eingeschobenen Chip-Karte 9 zu erreichen, sind am Einsteckende, dem Anschlußfeld 4 benachbart, eckenseitig zwei Anschläge 13 im Einschubkanal 8 angeordnet, deren Berührungsflächen mit der Chip-Karte 9 korrespondierend zu deren Eckrundung oder -schräge ausgebildet sind, so daß sich eine zentrierende Führung der Chip-Kartenbewegung in die gewünschte Endposition beim Einschieben ergibt. Damit ist sowohl das Einstecken der Chip-Karte in den Einschubkanal 8 durch die Einschubführung 5 als auch die Endpositionierung durch die Anschläge 13 geführt, deren Form in Fig. 1 durch eine vergrößerte Kreisausschnittszeichnung näher verdeutlicht ist.

Die Basisplatte 3 ist am Einschubschlitz 10 der Einschubführung 5, etwa den Anschlägen 13 gegenüberliegend mit geringfügig hochstehenden Klemmnocken 14 aus Metall oder Kunststoff versehen, mit denen die eingeschobene Chip-Karte im Einschubkanal 8 festgesetzt wird, um ein ungewolltes Herausrutschen zu verhindern. Die Chip-Karte 9 ist somit in Quer- und Längsrichtung arretiert. Zur besseren Einführung der Chip-Karte können Einlaufschrägen an den Klemmnocken und/oder dem Einschubschlitz ausgebildet sein. Zur leichteren Entnahme der eingeschobenen und gemäß obiger Beschreibung fixierten Chip-Karte 9 sind im Deckelelement 6 und/oder in der Basisplatte 3 mittige teilkreisförmige Aussparungen 15 vorgesehen, die dem Benutzer einen günstigen Zugriff zur Karte ermöglichen. Ergänzend sind die den Klemmnocken gegenüberliegenden Bereiche des Deckelelements 6 teilkreisförmig bei 16 zurückgesetzt, um die Einführung und Verriegelung der Chip-Karte 9 zu erleichtern.

Mit der als Kombichipkartenleser ausgebildeten Kontaktiereinheit 1 ist ferner die Auswertung einer zusätzlichen Mini-Chip-Karte 17 ermöglicht, indem auf der PCMCIA-Leiterplatte 7 ein elektrisches Kontaktelement 18 angeordnet ist, das einen Anschluß an den integrierten Schaltkreis der PCMCIA-Karte bereitstellt und durch das korrespondierend angeordnete Chipfeld 19 der Mini-Chip-Karte 17 kontaktierbar ist. Zu deren Halterung ist über, dem Kontaktelement 18 eine aus dem Deckelelement herausklappbare Kassettenaufnahme 20 angeordnet, unter der das Deckelelement entsprechend ausgeschnitten ist. In Fig.1 ist die hochgeklappte Stellung dargestellt, die die Einführung der Mini-Chip-Karte 17 ermöglicht. Nach deren Einschub in das Kassettenfach wird dieses in die Ebene des Deckelelements 6 eingeklappt und wird damit die Kontaktierung des Chipfeldes 19 mit über das Kontaktelement 18 mit der PCMCIA-Karte vorgenommen. Dazu kann das Kontaktelement 18 als Stecker oder auch als Leitgummistreifen 21 gemäß Fig.2 der Zeichnung ausgebildet sein. Bei dem dort dargestellte Ausführungsbeispiel einer Kontaktiereinheit ist der Kassettenteil durch einen Längssteg 22 in zwei Fächer unterteilt, in die zwei entsprechend klein ausgebildete Minichip-Speicherkarten eingesetzt werden können, die durch das Leitgummi 21 links und durch den Steckerteil 23 rechts kontaktierbar sind.

Die Kassettenaufnahme der Fig. 2 weist einen auf das Deckelelement 6 aufgesetzten Kassettenrahmen 24 mit Gelenkteil für den Klappmechanismus und vorn angebrachtem Rast- und Entrastmechanismus 25 auf. Aufgrund der schrägen Kassettenlage beim Beladen mit bestimmtem Anstellwinkel findet beim Schließen eine Kontaktselbstreinigung statt, da die beiderseitigen Kontaktflächen während der Schließbewegung der Kassette aneinanderreiben mit einer sich in der Positionierung verändernden Reibkante. Durch die im Benutzungszustand völlig geschlossene Kassette sind die Kontaktelemente vor Zugriff und Verschmutzung geschützt.

Im Kassettenrahmen sind neben dem Rastmechanismus 25 Andruck- und Haltefedern 26 angeordnet, durch die die eingeschobenen Chip-Karten in die Kontaktfunktionslage gebracht werden. Zusätzlich können sich in der Kassettenaufnahme 20 seitlich Andruckfedern befinden, die die Karten seitlich einklemmen und Schutz gegen Herausfallen bei geöffnetem Zustand der. Kassette bieten.

### Bezugszeichenliste

- 1: Kontaktiereinheit
- 2: Gehäuse
- 3: Basisplatte
- 4: Anschlußfeld
- 5: Einschubführung
- 6: Deckelelement
- 7: PCMCIA-Leiterplatte
- 8: Einschubkanal
- 9: Chip-Karte
- 10: Einschubschlitz
- 11: Chipfeld
- 11': Kontaktelemente
- 12: Blechabdeckung
- 13: Anschläge
- 14: Klemmnocken
- 15: Aussparungen, Ausnehmung
- 16: Teilkreis-Ausnehmungen
- 17: Mini-Chip-Karte
- 18: Kontaktelement
- 19: Chipfeld
- 20: Kassettenaufnahme
- 21: Leitgummistreifen
- 22: Längssteg
- 23: Steckerteil
- 24: Kassettenrahmen
- 25: Rast-/Entrastmechanismus
- 26: Andruck- und Haltefedern
- 27: Rahmen

## Patentansprüche

1. Kontaktiereinheit für ein kartenförmiges Trägerelement elektronischer Baugruppen, insbesondere nach PCMCIA-Norm, mit einem einen schlitzartigen Einschubkanal (8) für das kartenförmige Trägerelement, insbesondere eine Chip-Karte (9), aufweisenden Gehäuse (2), in dem eine Leiterplatte (7) angeordnet ist, die zusätzlich zu dem an einer Kante angeordneten Anschlußfeld (4) an einer Oberfläche mit Kontaktelementen (11') für die Kontaktierung des kartenförmigen Trägerelements (9) ausgerüstet ist, wobei das kartenförmige Trägerelement (9) parallel zur Leiterplatte (7) in den schlitzartigen Einschubkanal (8) des Gehäuses (2) der Kontaktiereinheit (1) einschiebbar ist, welcher zwischen einer Basisplatte (3) des Gehäuses (2) und der Leiterplatte (7) seitlich offen ausgebildet ist und eine Einschubführung (5) für das kartenförmige Trägerelement (9) an dem dem Anschlußfeld (4) gegenüberliegenden Ende aufweist, und wobei am Anschlußfeld (4) zwei die Einstecktiefe für das kartenförmige Trägerelement (9) eckseitig begrenzende Anschläge (13) vorgesehen sind, die eine an die Eckenform des kartenförmigen Trägerelements (9) angepaßte Konturschräge oder einen an die Eckenform des kartenförmigen Trägerelements (9) angepaßten Konturradius aufweisen,
**dadurch gekennzeichnet,**
**daß** die Einschubführung (5) für das kartenförmige Trägerelement (9) über den Einschubbereich hinaus sich erstreckend in Form einer seitlichen Abdeckung (12) bis in den Bereich des Anschlußfeldes (4) verlängert ist und auf der Leiterplatte (7) wenigstens ein weiteres elektrisches Kontaktelement (18), insbesondere ein Stecker (23), angeordnet ist, über welches eine aus der Oberfläche der Kontaktiereinheit (1) herausklappbare Mini-Chip-Kartenaufnahme (20) der Kontaktiereinheit (1) elektronisch kontaktierbar ist, wobei Einschub und Entnahme einer Mini-Chip-Karte (17) bei aufgeklappter Mini-Chip-Kartenaufnahme (20) vomehmbar ist, während in geschlossenem Zustand der Mini-Chip-Kartenaufnahme (20) die elektrische Kontaktierung der in die Mini-Chip-Kartenaufnahme (20) eingesetzten Mini-Chip-Karte (17) insbesondere für die Lesefunktion durchgeführt ist.

2. Kontaktiereinheit nach Anspruch 1, **dadurch gekennzeichnet, daß** an der Einschubführung (5) für das kartenförmige Trägerelement (9) eine Verriegelungseinrichtung, vorzugsweise in Form zweier mit den Anschlägen (13) korrespondierender Klemmnocken (14), vorgesehen ist, mit der das kartenförmige Trägerelement (9) in seiner Endposition - bei Bedarf wieder entnehmbar - sicherbar ist.

3. Kontaktiereinheit nach Anspruch 1 oder 2, **dadurch gekennzeichnet, daß** die Kontaktiereinheit (1) aus einem Gehäuse (2) mit einem die Leiterplatte (7) haltenden Rahmen (27) besteht, an dessen einer Stirnseite die Einschubführung (5) und an dessen anderer Stirnseite das Anschlußfeld (4) angeordnet sind, die durch die mit Abstand parallel zur Leiterplatte (7) verlaufende Basisplatte (3) miteinander verbunden sind derart, daß der Einschubkanal (8) für das kartenförmige Trägerelement (9) gebildet ist, der endseitig durch die beiden Anschläge (13) und Klemmnocken (14) begrenzt ist, wobei die seitlichen Abdeckungen (12) zwischen Einschubführung (5) und Anschlußfeld (4) den Rahmen (27) bis zur Dicke der Leiterplatte (7) bedecken und den Einschubkanal (8) seitlich freilassen.

4. Kontaktiereinheit nach Anspruch 3, **dadurch gekennzeichnet, daß** der Rahmen (27) als einstückiges Kunststoffteil ausgebildet und mit der Basisplatte (3) und einem Deckelelement (6) des Gehäuses (2) zu einer Einheit verbunden ist, wobei die Basisplatte (3) und das Deckeielement (6) als einstückiges Blechteil ausgebildet sind.

5. Kontaktiereinheit nach Anspruch 3 oder Anspruch 4, **dadurch gekennzeichnet, daß** die seitlichen Abdeckungen (12) an einem den Rahmen (27) an der Oberseite abschließenden Deckelelement (6), insbesondere aus Blech, durch leistenförmige Abbiegungen zur U-Querschnittsform ausgebildet sind.

6. Kontaktiereinheit nach einem der Ansprüche 1 bis 5, **dadurch gekennzeichnet, daß** die Einschubführung (5) mit Einlaufschrägen ausgestattet ist.

7. Kontaktiereinheit nach einem der Ansprüche 2 bis 6, **dadurch gekennzeichnet, daß** der den Klemmnocken (14) gegenüberliegende Bereich mit einer Ausnehmung (15) zurückspringend ausgebildet ist.

8. Kontaktiereinheit nach einem der Ansprüche 1 bis 7, **dadurch gekennzeichnet, daß** das elektrische Kontaktelement (18) ein Leitgummistreifen (21) ist

9. Kontaktiereinheit nach einem der Ansprüche 1 bis 8, **dadurch gekennzeichnet, daß** die Mini-Chip-Kartenaufnahme (20) durch einen oder mehrere Stege (22) in Fächer zur Aufnahme mehrerer Mini-Chip-Karten (17) unterteilt ist, so daß ein Kombichipkartenlesegerät nach PCMCIA-Norm geschaffen ist, das ein kartenförmiges Trägerelement (9) nach DIN/ISO 7816, insbesondere eine Chip-Karte (9), und eine oder mehrere Mini-Chip-Karten (17) kombiniert.

10. Kontaktiereinheit nach einem der Ansprüche 1 bis 9, **dadurch gekennzeichnet, daß** in der Basisplatte (3) des Gehäuses (2) ein Fenster in der Größe des Chip-Kartenlesers eingebracht ist, um mit einem fremden Kartensystem eine Personalisierung des Moduls vornehmen zu können.

11. Kontaktiereinheit nach einem der Ansprüche 1 bis 10, **dadurch gekennzeichnet, daß** die Mini-Chip-Kartenaufnahme (20) als Kassettenmechanismus mit einer Rast-/Entrasteinrichtung (25) versehen ist, vorzugsweise in einer Anordnung, die eine Entriegelung im gesteckten Betriebszustand der Kontaktiereinheit (1) nicht ermöglicht, wobei über die schrägstehende Kassettenlage in Öffnungsstellung während des Schließvorgangs eine Kontaktselbstreinigung dadurch vorgenommen ist, daß eine Kontaktflächenreibung zwischen dem Chipfeld (19) einer Mini-Chip-Karte (17) und dem elektrischem Kontaktelement (18) bewirkt wird.

12. Kontaktiereinheit nach einem der Ansprüche 1 bis 11, **dadurch gekennzeichnet, daß** in der Mini-Chip-Kartenaufiahme (20) Andruck- oder Haltefedern (26) vorgesehen sind, mit denen eine in die Mini-Chip-Kartenaufnahme (20) eingesetzte Mini-Chip-Karte (17) in Kontaktfunktionslage bringbar ist.

13. Kontaktiereinheit nach einem der Ansprüche 1 bis 12, **dadurch gekennzeichnet, daß** seitliche Andruckfedem vorgesehen sind, eine in die Mini-Chip-Kartenaufnahme (20) eingesetzte Mini-Chip-Karte (17) seitlich klemmen und dadurch Schutz gegen Herausfallen bei geöffneter Mini-Chip-Kartenaufnahme (20) bieten.

## Claims

1. Contacting unit for a card-shaped carrier element for electronic modules, in particular in accordance with the PCMCIA Standard, with a housing (2) having a slot-shaped insertion channel (8) for the card-shaped carrier element, in particular a chip card (9), in which a circuit board (7) is disposed which, in addition to a connecting field (4) arranged at one edge is provided on one surface with contact elements (11') for contacting the card-shaped carrier element (9), where the card-shaped carrier element (9) may be inserted in parallel with the circuit board (7) into the slot shaped insertion channel (8) of housing (2) of the contacting unit (1) that is formed between a base plate (3) of the housing (2) and the circuit board (7) so as to be open on its side and has an insertion guide (5) for the card-shaped carrier element (9) at its end which is opposite to the connecting field (4), and where two end stops (13) that limit the depth of insertion of the card-shaped carrier element (9) at the comers are provided at the connecting field (4), where the end stops have a sloping contour matching the comer shape of the card-shaped carrier element (9), or a radiused contour that matches the shape of the comer of the card-shaped carrier element (9),
**characterised in that** the insertion guide (5) for the card-shaped carrier element (9) is extended beyond the insertion area in the form of a side cover (12) into the area of the connecting field (4) and that the circuit board (7) has at least one further electrical contacting element (18), in particular a plug (23), by means of which a mini chip card holder (20) of the contacting unit (1) that can be folded out from the surface of the contacting unit (1) may be electronically contacted, where insertion and removal of a mini chip card (17) can be effected with the mini chip card holder (20) folded out, whereas in the closed state of the mini chip card holder (20) electrical contacting of the mini chip card (17) inserted into the mini chip card holder (20), in particular for the reading function, is effected.

2. Contacting unit in accordance with Claim 1, **characterised in that** a latching mechanism, preferably in the form of two locating cams (14) corresponding to the end stops (13), is provided at the insertion guide (5) for the card-shaped carrier element (9), with which the card-shaped carrier element (9) can be latched - removably, if required - in its final position.

3. Contacting unit in accordance with Claim 1 or 2, **characterised in that** the contacting unit (1) consists of a housing (2) with a frame (27) holding the circuit board (7), where the insertion guide (5) is provided at one facing end of the housing, and the connecting field (4) at the opposite facing end of the housing and these are connected by means of a base plate (3) extending at a distance from, and in parallel with, the circuit board (7) in such a manner that the insertion channel (8) for the card-shaped carrier element (9) is formed which is limited at the end by the two end stops (13) and locating cams (14), where the side covers (12) between the insertion guide (5) and the connecting field (4) cover the frame (27) up to the thickness of the circuit board (7) and leave the insertion channel (8) open on its side.

4. Contacting unit in accordance with Claim 3, **characterised in that** the frame (27) is designed as a one-piece plastics part and is made into a single unit with the base plate (3) and one cover element (6) of housing (2), where the base plate (3) and the cover element (6) are formed as a one-piece sheet metal part.

5. Contacting unit in accordance with Claim 3 or Claim 4, **characterised in that** the side covers (12) are formed into U-shaped channels from a cover element (6) made in particular of sheet metal that finishes the top of the frame (27).

6. Contacting unit in accordance with one of Claims 1 to 5, **characterised in that** the insertion guide (5) has sloping insert portions.

7. Contacting unit in accordance with one of Claims 2 to 6, **characterised in that** the area opposite to the locating cams (14) is formed with a cut out recess (15).

8. Contacting unit in accordance with one of Claims 1 to 7, **characterised in that** the electrical contacting element (18) is a conductive rubber strip (21).

9. Contacting unit in accordance with one of Claims 1 to 8, **characterised in that** the mini chip card holder (20) is subdivided by one or several webs (22) into compartments for the accommodation of several mini chip cards (17) so that a combined chip card reader in accordance with the PCMCIA standard is obtained which combines a card-shaped carrier element (9) in accordance with DIN/ISO 7816, and in particular a chip card (9) and one or several mini chip cards (17).

10. Contacting unit in accordance with one of Claims 1 to 9, **characterised in that** there is a window of the size of the chip card reader in the base plate (3) of the housing (2) so as to be able to personalise the module in an alien card system.

11. Contacting unit in accordance with one of Claims 1 to 10, **characterised in that** the mini chip card holder (20), as a cassette mechanism, is provided with a latching/releasing mechanism (25), preferably in an arrangement which does not allow release in inserted operating condition of the contacting unit (1) where, owing to the sloping cassette position in the open position, self-cleaning of the contacts is achieved, due to friction between the contact faces of the chip field (19) of a mini chip card (17) and the electrical contacting element (18).

12. Contacting element in accordance with one of Claims 1 to 11, **characterised in that** compression or retaining springs (26) are provided in the mini chip card holder (20) with which a mini chip card (17) inserted into the mini chip card holder (20) can be brought into the functional contact position.

13. Contacting unit in accordance with one of claims 1 to 12, **characterised in that** lateral compression springs are provided which clamp a mini chip card (17) inserted into the mini chip card holder (20) laterally and hence protect it from falling out when the mini chip card holder (20) is open.

## Revendications

1. Unité de mise en contact pour un élément de support en forme de carte d'ensembles électroniques, notamment selon la norme PCMCIA, comprenant un boîtier (2) présentant un canal d'insertion (8) pour l'élément de support en forme de carte, notamment une carte à puce (9), dans lequel est disposée une plaquette imprimée (7), qui en plus du champ de raccordement (4) disposé au niveau d'un bord est munie sur une surface d'éléments de contact (11') pour la mise en contact de l'élément de support (9) en forme de carte, l'élément de support (9) en forme de carte pouvant être inséré parallèlement à la plaquette imprimée (7) dans le canal d'insertion (8) en forme de fente du boîtier (2) de l'unité de mise en contact (1), canal d'insertion formé de façon latéralement ouverte entre une plaquette de base (3) du boîtier (2) et la plaquette imprimée (7) et présentant un guidage d'insertion (5) pour l'élément de support (9) en forme de carte au niveau de l'extrémité en regard du champ de raccordement (4), et sur le champ de raccordement (4) deux butées (13) délimitant la profondeur d'enfichage de l'élément de support (9) en forme de carte étant prévues, qui présentent un chanfrein de contour adapté à la forme angulaire de l'élément de support (9) en forme de carte ou un rayon de contour adapté à la forme angulaire de l'élément de support (9) en forme de carte,
**caractérisée en ce que** le guidage d'insertion (5) pour l'élément de support (9) en forme de carte est prolongé au-delà de la zone d'insertion en s'étendant sous la forme d'une couverture latérale (12) jusqu'à la zone de raccordement (4), et **en ce que** sur la plaquette imprimée (7) au moins un autre élément de contact électrique (18), notamment un connecteur (23), est disposé, par lequel un logement de carte à puce miniature (20) de l'unité de mise en contact (1) pouvant être escamoté de la surface de l'unité de mise en contact (1) peut être mis en contact électroniquement, l'insertion et le retrait d'un carte à puce miniature (17) pouvant s'effectuer lorsque le logement de carte à puce miniature (20) est ouvert, tandis qu'à l'état fermé du logement de carte à puce miniature (20) la mise en contact électrique de la carte à puce miniature (17) insérée dans le logement de carte à puce miniature (20) est réalisée notamment pour la fonction de lecture.

2. Unité de mise en contact selon la revendication 1, **caractérisée en ce que** sur le guidage d'insertion (5) pour l'élément de support (9) en forme de carte un dispositif de verrouillage est prévu, de préférence sous la forme de deux cames de serrage (14) correspondant aux butées (13), permettant d'arrêter l'élément de support (9) en forme de carte dans sa position finale - pouvant être retiré en cas de besoin.

3. Unité de mise en contact selon la revendication 1 ou 2, **caractérisée en ce que** l'unité de mise en contact (1) comprend un boîtier (2) avec un cadre (27) maintenant la plaquette imprimée (7), à une face frontale duquel est disposé le guidage d'insertion (5) et à l'autre face frontale duquel est disposé le champ de raccordement (4), faces frontales qui sont reliées l'une à l'autre par la plaquette de base (3) s'étendant à distance parallèlement à la plaquette imprimée (7), de telle sorte à former un canal d'insertion (8) pour l'élément de support (9) en forme de carte, délimité aux extrémités par les deux butées (13) et des cames de serrage (14), les couvertures latérales (12) entre le guidage d'insertion (5) et le champ de raccordement (4) recouvrant le cadre (27) jusqu'à l'épaisseur de la plaquette imprimée (7) et laissant libre latéralement le canal d'insertion (8).

4. Unité de mise en contact selon la revendication 3, **caractérisée en ce que** le cadre (27) est formé d'une seule pièce en matière plastique et relié à la plaquette de base (3) et un élément de couverture (6) du boîtier (2) pour constituer une unité, la plaquette de base (3) et l'élément de couverture (6) étant formés d'une seule pièce en tôle.

5. Unité de mise en contact selon la revendication 3 ou la revendication 4, **caractérisée en ce que** les couvertures latérales (12) sont formées sur un élément de couverture (6), notamment en tôle, fermant le cadre (27) au niveau de la face supérieure, par des courbures en forme de baguettes par rapport à la forme de section transversale en U.

6. Unité de mise en contact selon l'une des revendications 1 à 5, **caractérisée en ce que** le guidage d'insertion (5) est muni de chanfreins d'introduction.

7. Unité de mise en contact selon l'une des revendications 2 à 6, **caractérisée en ce que** la zone située en regard des cames de serrage (14) est formée par un creux (15) en retrait.

8. Unité de mise en contact selon l'une des revendications 1 à 7, **caractérisée en ce que** l'élément de contact électrique (18) est une bande en caoutchouc conducteur (21).

9. Unité de mise en contact selon l'une des revendications 1 à 8, **caractérisée en ce que** le logement de carte à puce miniature (20) est divisé par une ou plusieurs nervures (22) en compartiments pour loger plusieurs cartes à puce miniatures (17) pour ainsi réaliser un lecteur de cartes à puce mixte selon la norme PCMCIA, qui combine un élément de support (9) en forme de carte selon DIN/ISO 7816, notamment une carte à puce (9), et une ou plusieurs cartes à puce miniatures (17).

10. Unité de mise en contact selon l'une des revendications 1 à 9, **caractérisée en ce que** dans la plaquette de base (3) du boîtier (2) une fenêtre de la taille du lecteur de cartes à puce est prévue, afin de pouvoir effectuer une personnalisation du module avec un système de carte étranger.

11. Unité de mise en contact selon l'une des revendications 1 à 10, **caractérisée en ce que** le logement de carte à puce miniature (20) comme mécanisme à cassette est muni d'un dispositif de blocage/déblocage (25), de préférence selon une disposition ne permettant pas de déverrouillage de l'unité de mise en contact (1) à l'état enfiché, un auto-nettoyage de contact étant effectué pendant le processus de fermeture, grâce à la position de cassette inclinée en position d'ouverture, **en ce qu'**un frottement des surfaces de contact entre le champ de puce (19) d'une carte à puce miniature (17) et l'élément de contact électrique (18) est provoqué.

12. Unité de mise en contact selon l'une des revendications 1 à 11, **caractérisée en ce que** dans le logement de carte à puce miniature (20) des ressorts d'appui ou de maintien (26) sont prévus permettant de mettre en position de fonction de contact une carte à puce miniature (17) insérée dans un logement de carte à puce miniature (20).

13. Unité de mise en contact selon l'une des revendications 1 à 12, **caractérisée en ce que** des ressorts d'appui latéraux sont prévus pour enserrer latéralement une carte à puce miniature (17) insérée dans le logement de carte à puce miniature (20) pour ainsi offrir une protection contre les chutes lorsque le logement de carte à puce miniature (20) est ouvert.
